# EUROPÄISCHE PATENTSCHRIFT

(11) **EP 0 738 626 B1**
(45) Veröffentlichungstag und Bekanntmachung des Hinweises auf die Patenterteilung: **24.03.1999**
(21) Anmeldenummer: 96103658.9
(22) Anmeldetag: 09.03.1996
(51) Int. Cl.: B60P 7/08, B60P 7/14

(54) **Vorrichtung zum variablen Unterteilen eines Kraftfahrzeug-Kofferraums und Festhalten des Ladegutes**
Device for variable partitioning of a luggage compartment of a motor vehicle and for retaining freight
Dispositif de compartimentage variable d'un compartiment à bagage d'un véhicule à moteur et de fixation de la charge

(30) Priorität: 20.04.1995 DE 19514605
(43) Veröffentlichungstag der Anmeldung: 23.10.1996
(73) Patentinhaber: fischerwerke Artur Fischer GmbH & Co. KG, D-72178 Waldachtal (DE)
(72) Erfinder: Ackeret, Peter, 8700 Küsnacht (CH)

(56) Entgegenhaltungen:
- DE-A- 2 701 786
- DE-A- 3 048 826
- DE-U- 7 819 957
- DE-U- 7 828 641

## Beschreibung

Die Erfindung betrifft eine Vorrichtung zum variablen Unterteilen eines Kraftfahrzeug-Kofferraums und Festhalten des Ladegutes.

Je nach Verwendung des Kraftfahrzeuges ist das im Kofferraum mitzuführende Ladegut bezüglich Anzahl Einzelstücken sowie deren Formen und Grössen stark unterschiedlich.

Insbesondere im Alltagsgebrauch werden im Kofferraum oft nur kleinere Einzelstücke, wie beispielsweise Einkaufstaschen, Aktenkoffer etc. mitgeführt, welche nur einen Teil des Kofferraums beanspruchen.

Solche ungesicherten Transportgüter neigen dazu, bei Beschleunigungen durch Anfahren, Bremsen oder Kurvenfahrt im Kofferraum hin- und herzurutschen oder gar umzukippen, was bei schweren bzw. empfindlichen Transportgütern leicht zu Beschädigungen am Ladegut oder auch am Kraftfahrzeug führen kann.

Auf dem Markt sind sogenannte "Antirutschmatten" erhältlich, welche auf dem Boden des Kofferraums ausgelegt werden und verhindern sollen, dass sich das Ladegut während der Fahrt verschieben kann. Solche "Antirutschmatten" sind jedoch nur für Ladegüter bestimmter Formen, Grössen und Gewichte und nur bei relativ geringen Beschleunigungswerten wirksam. Auch kann mit diesen "Antirutschmatten" das Umkippen von Ladegütern nicht verhindert werden.

Aus der DE-A 30 48 826 ist eine Vorrichtung zum variablen Unterteilen eines Kraftfahrzeugkofferraums bekannt. Die bekannte Vorrichtung weist eine auf dem Kofferraumboden angeordnete Führungsschiene auf, an der eine senkrecht stehende Abstützplatte angeordnet ist, die mittels eines an der Führungsschiene geführten Führungsschlittens quer verschieblich ist. Der Führungsschlitten ist mittels einer Feststellbremse an jeder Stelle der Führungsschiene arretierbar, so daß sich die Abstützplatte an eine gewünschte Stelle im Kofferraum verschieben läßt. Wird die Abstützplatte nicht benötigt, läßt sie sich zu einer Seite um 90 Grad auf den Kofferraumboden niederschwenken.

Aus der DE-U 78 19 957 ist ein Plattensystem zum Unterteilen eines Kraftfahrzeug-Kofferraums bekannt. Bei diesem Plattensystem werden lösbar miteinander verbindbare Platten auf dem Kofferraumboden ausgelegt. Auf diesen Platten sind weitere Platten zur Unterteilung des Kofferraum stehend anbringbar.

Aufgabe der vorliegenden Erfindung ist die Schaffung einer Vorrichtung zum variablen Unterteilen eines Kraftfahrzeug-Kofferraums und Festhalten des Lagegutes, welche rasch und stufenlos an die jeweiligen Bedürfnisse angepaßt werden kann und bei Nichtgebrauch einen minimalen Platz im Kofferraum beansprucht und welche einfach bedienbar ist.

Die gemäß vorliegender Erfindung zur Lösung dieser Aufgabe vorgesehenen Merkmale sind im Patentanspruch 1 genannt.

Die erfindungsgemäße Vorrichtung umfaßt eine Arretierung, die die Abstützplatte in ihrer senkrecht stehenden Lage hält. Die Arretierung ist mit einer Entriegelungsvorrichtung manuell lösbar, um die Abstützplatte bei Nichtgebrauch vorzugsweise zu beiden Seiten auf den Kofferraumboden niederschwenken zu können. Die erfindungsgemäße Arretierung hält die Abstützplatte sicher in ihrer stehenden Lage. Ein selbsttätiges und nicht erwünschtes Umfallen der Abstützplatte bspw. als Folge von während der Fahrt des Kraftfahrzeugs auftretenden Erschütterungen ist ausgeschlossen.

Desweiteren weist die erfindungsgemäße Vorrichtung eine gemeinsame Entriegelungsvorrichtung auf, mit der die Arretierung, die die Abstützplatte stehend hält, und die Feststellbremse, die die Abstützplatte gegen unbeabsichtigtes Verschieben sichert, gemeinsam von Hand entriegelbar sind. Es genügt also ein Handgriff mit einer Hand, um sowohl die Arretierung als auch die Feststellbremse zu lösen. Durch diese Einhandbedienung ist die Abstützplatte der erfindungsgemäßen Vorrichtung schnell und einfach an jede gewünschte Stelle des Kofferraums verschieb- und auf den Kofferraumboden liegend niederschwenk- bzw. im Kofferraum stehend hochschwenkbar.

Die Führungsschiene ist vorzugsweise am (in Fahrtrichtung) hinteren Ende des Kofferraumbodens quer zur Fahrtrichtung des Kraftfahrzeugs befestigt und erstreckt sich im wesentlichen über die gesamte Breite des Kofferraums, so dass mehrere Abstützplatten verwendet werden können und eine Unterteilung an jeder Stelle des Kofferraumes möglich ist.

Dabei kann die Führungsschiene direkt am Kofferraumboden festgeschraubt oder über fest am Kofferraumboden angebrachte Kupplungselemente lösbar mit diesem verbunden sein.

Die Führungsschiene kann als Profilschiene ausgebildet sein, in bzw. auf der der Führungsschlitten gelagert ist.

Der Führungsschlitten ist vorzugsweise mit einer manuell lösbaren Feststellbremse versehen, so dass die Abstützplatte sekundenschnell in jede gewünschte Position verschoben und dort fixiert werden kann.

Die Abstützplatte ist über eine, im Bereich und parallel zu ihrer unteren Längskante angeordnete Achse drehbar am Führungsschlitten angelenkt und um mindestens 90°, vorzugsweise um 180°, schwenkbar.

In der horizontalen Lage liegt die Abstützplatte flach auf dem Kofferraumboden und bildet so, insbesondere bei der Verwendung mehrerer, nebeneinander angeordneter Abstützplatten, einen stabilen und robusten Schutzboden im Kofferraum.

Die Abstützplatten können auf ihren Breitseiten mit einem "Antirutschbelag" versehen sein und verhindern so zusätzlich das Verrutschen des Ladegutes.

Zum Unterteilen des Kofferraums wird die Abstützplatte in die senkrechte Lage hochgeschwenkt, in der sie in einer, vorzugsweise am Führungsschlitten angeordneten, manuell lösbaren Verriegelung einrastet.

Durch Verschieben des Führungsschlittens kann die Abstützplatte in die gewünschte Position verschoben werden.

Dies ermöglicht eine stufenlose Unterteilung des Kofferraums in Abteile jeder gewünschten Grösse.

Bei der Verwendung mehrerer Abstützplatten können so auch mehrere Abteile individueller Grössen gebildet werden.

Bei Nichtgebrauch können die Abstützplatten nebeneinander flach auf den Kofferraumboden abgeklappt oder in der vertikalen Stellung zur Seitenwand des Kofferraums hingeschoben werden und benötigen so nur wenig Platz. Auch ist ein problemloser und schneller Zugang zum Kofferraumboden, beispielsweise zur Entnahme des Reserverades, gewährleistet.

Die Führungsschiene ist vorzugsweise (in Fahrtrichtung) hinter den Abstützplatten angeordnet.

Zur Erhöhung der Stabilität wäre es aber auch möglich, die Abstützplatten in zwei, auf beiden Stirnseiten angeordneten Führungsschienen, oder in einer, zwischen der vorderen und hinteren Stirnseite angeordneten, Führungsschiene zu lagern.

Auch bestünde die Möglichkeit, die Vorrichtung um 90° gedreht in den Kofferraum einzubauen, so dass die Führungsschiene parallel und die Abstützplatte quer zur Fahrtrichtung angeordnet wären.

Die Abstützplatten können auf ihren Breitseiten mit Verbindungselementen versehen sein, welche es ermöglichen, verschiedene Module zu befestigen.

Vorzugsweise sind diese Verbindungselemente auf beiden Breitseiten der Abstützplatten symmetrisch und so angeordnet, dass die Befestigung solcher Module an jeder gewünschten Stelle der Abstützplatte möglich ist.

Die Verbindungselemente können beispielsweise als Nut- und Federführungen ausgebildet sein, welche sich im wesentlichen über die gesamte Länge der Abstützplatten erstrecken, so dass die eingesetzten Module in jede gewünschte Position verschoben werden können.

Bei dieser Ausführungsform sind die Module mit einer manuell lösbaren Verriegelung zu versehen, mittels der sie in der vorgesehenen Position an der Abstützplatte arretiert werden können.

Solche Module können einen Befestigungsmodul umfassen, mittels welchem beispielsweise Spannseile zur Sicherung des Ladegutes an der Abstützplatte befestigt werden können.

Dazu ist der Befestigungsmodul mit einer entsprechenden Oese, beziehungsweise einem Befestigungshaken zu versehen.

An einem als Befestigungshaken oder als Klammer ausgebildeten Befestigungsmodul können an einer vertikal aufgerichteten Abstützplatte, beispielsweise auch die Traggriffe einer Einkaufstasche eingehängt und diese so gegen Umkippen gesichert werden.

Mit den Abstützplatten ist eine Unterteilung des Kofferraumes in einer Achse, beispielsweise quer zur Fahrtrichtung, möglich.

Oft besteht aber der Wunsch nach einer zusätzlichen Unterteilungsmöglichkeit in der zweiten Achse, beispielsweise in Fahrtrichtung.

Je nach Unterteilung des Kofferraums variiert jedoch der Abstand der Abstützplatten untereinander, so dass eine zusätzliche Unterteilung in der zweiten Achse nur möglich ist, wenn diese an die jeweilige Distanz zwischen zwei Abstützplatten angepasst werden kann.

Zu diesem Zweck sind Gurtmodule vorgesehen, welche mit den Verbindungselementen der Abstützplatten kraftschlüssig verbunden werden können und welche über einen Aufrollgurt miteinander verbunden sind.

Durch die Aufrollmechanik wird der Gurt automatisch an die jeweilige Distanz zwischen den Abstützplatten angepasst und mittels einer manuell lösbaren Bremse in dieser Auszugsstellung blockiert.

Diese Gurtmodule können auch zum Festhalten des Ladegutes an einer Abstützplatte verwendet werden.

Dabei werden beide Module an derselben Abstützplatte (vorzugsweise auf der gleichen Breitseite) befestigt und das Ladegut mit dem Gurt umspannt.

Dies ist sowohl in der horizontalen wie auch in der vertikalen Lage der Abstützplatte möglich.

Die Breite des Gurtes entspricht vorzugsweise in etwa der Breite der Abstützplatten; die Gurtlänge ist auf den maximalen Abstand der Abstützplatten untereinander bzw. auf die Grösse der festzuhaltenden Ladegüter abzustimmen.

Die Aufrollmechanik für den Gurt kann in einer, oder - bei längeren Gurten - in beiden Modulen vorgesehen werden.

Nebst den Befestigungs- und den Gurtmodulen könnten natürlich auch weitere Module, wie beispielsweise offene oder geschlossene Behältnisse, nach demselben Prinzip an den Abstützplatten befestigt werden.

Weitere Merkmale und Vorteile der Erfindung ergeben sich aus den Unteransprüchen bzw. der Beschreibung von Ausführungsbeispielen der Erfindung, welche nachstehend unter Bezugnahme auf die beigefügten Zeichnungen erläutert werden.

Es zeigen in einer skizzenhaften Darstellung:
- Fig. 1: die im Kraftfahrzeug-Kofferraum eingebaute Vorrichtung, in perspektivischer Darstellung, mit Abstützplatten in horizontalen und vertikalen Stellungen, sowie Gurtmodulen in verschiedenen Anwendungen.
- Fig. 2: einen Längsschnitt der Vorrichtung im Bereich einer aufgeklappten Abstützplatte.
- Fig. 3: eine Frontansicht der Vorrichtung mit der Abstützplatte in horizontalen und vertikalen Stellungen.
- Fig. 4: die im Kraftfahrzeug-Kofferraum eingebaute Vorrichtung in perspektivischer Darstellung, mit Abstützplatten in horizontalen und vertikalen Stellungen, sowie Befestigungsmodulen in verschiedenen Anwendungen.
- Fig. 5: den geschlossenen Befestigungsmodul in perspektivischer Darstellung.
- Fig. 6: den aufgeklappten Befestigungsmodul in perspektivischer Darstellung.
- Fig. 7: einen Querschnitt durch die Abstützplatte mit eingesetzten Befestigungsmodulen in geschlossenen und aufgeklappten Stellungen.
- Fig. 8: zwei Gurtmodule im Längsschnitt, wovon einer in die Abstützplatte eingesetzt ist.
- Fig. 9: einen Querschnitt durch den in die Abstützplatte eingesetzten Gurtmodul gemäss Darstellung von Fig. 8.

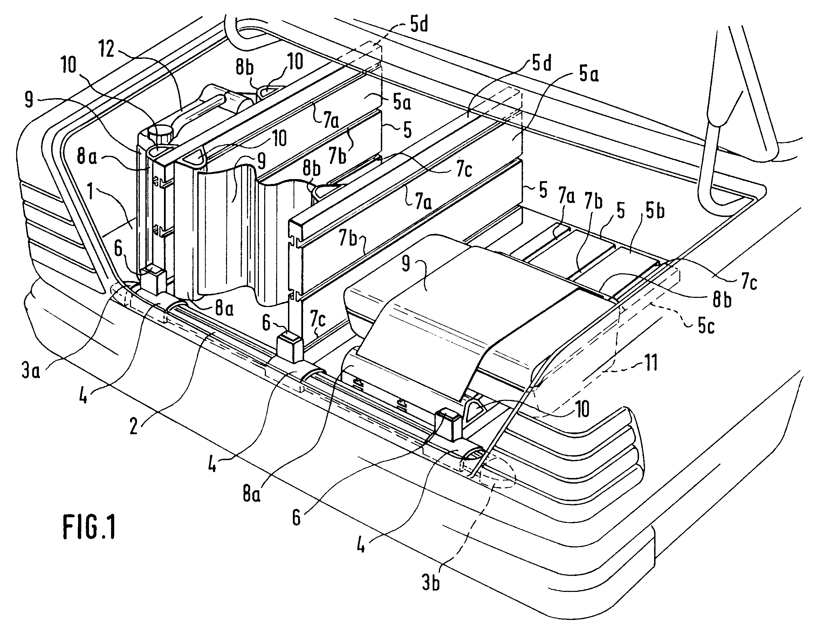

Figur 1 zeigt die Vorrichtung, eingebaut im Kraftfahrzeug-Kofferraum mit zwei Abstützplatten 5 in vertikaler, sowie einer Abstützplatte 5 in horizontaler Stellung.

Am hinteren Ende des Kofferraumbodens 1 ist die Führungsschiene 2 mittels Kupplungselementen 3a, 3b quer zur Fahrtrichtung des Fahrzeuges, lösbar befestigt.

Auf der Führungsschiene 2 sind die Führungsschlitten 4 verschieblich gelagert.

An den Führungsschlitten 4 sind die Abstützplatten 5 drehbar angelenkt und können von der horizontalen Lage, in welcher sie im wesentlichen parallel zum Kofferraumboden 1 liegen, in eine senkrechte Lage zum Kofferraumboden 1 hochgeschwenkt werden, in der sie durch Arretierungen 16a, 16b festgehalten werden.

An den Führungsschlitten 4 sind Entriegelungsvorrichtungen 6 angeordnet, mittels denen die Arretierungen 16a, 16b der Abstützplatten 5 und gleichzeitig die Feststell-bremsen 17 zur Positionierung der Führungsschlitten 4 auf der Führungsschiene 2 gelöst werden können.

Auf ihren Breitseiten 5a, 5b sind die Abstützplatten 5 mit den als Nut-und Federführungen ausgebildeten Verbindungselementen 7a, 7b, 7c versehen, welche sich parallel zu den horizontalen Stirnseiten 5c, 5d über die gesamte Länge der Abstützplatte 5 erstrecken.

An den Verbindungselementen 7a, 7b, 7c sind die Gurtmodule 8a, 8b befestigt, welche jeweils über einen ausziehbaren Gurt 9 miteinander verbunden sind.

An den Gurtmodulen 8a, 8b sind stirnseitige Drucktasten 10 angeordnet, bei deren Betätigung die Verriegelungen 30 der Gurtmodule 8a, 8b in den Verbindungselementen 7a, 7b, 7c und gleichzeitig die Bremsen 32, welche den Gurt 9 in der jeweiligen Auszugsposition blockieren, gelöst werden, so dass die Gurtmodule 8a, 8b auf der Abstützplatte 5 verschoben und gleichzeitig der Gurt 9 in die gewünschte Auszugsposition gebracht werden kann.

Mit den Gurtmodulen 8a, 8b können einerseits Transportgüter 11, 12 unterschiedlicher Grössen auf den horizontalen, bzw. seitlich an den vertikalen Abstützplatten 5 befestigt und andererseits zusätzliche Unterteilungen zwischen den Abstützplatten 5 gebildet werden, welche sich automatisch an den jeweiligen Abstand dieser Abstützplatten 5 anpassen.

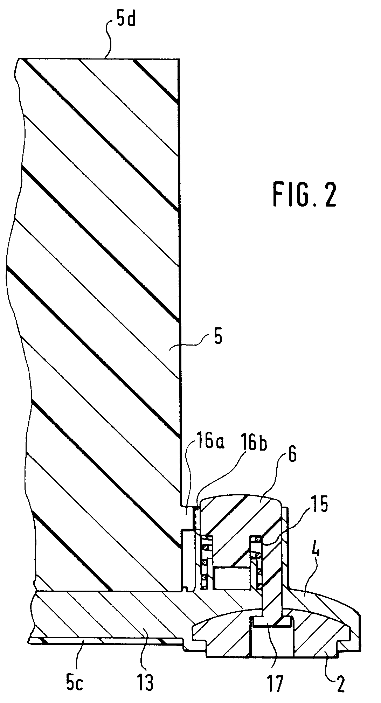

Figur 2 zeigt die Vorrichtung im Längsschnitt.

Die in die senkrechte Stellung aufgerichtete Abstützplatte 5 ist über die, im Bereich und parallel zu ihrer unteren Stirnseite 5c angeordnete, Achse 13 drehbar am Führungsschlitten 4 angelenkt.

Am Führungsschlitten 4 ist auch die Entriegelungsvorrichtung 6 angeordnet, die gegen die Kraft der Feder 15 nach unten gedrückt werden kann.

Dabei werden die Arretierung 16a, 16b, welche die Abstützplatte 5 in der senkrechten Lage festhält und gleichzeitig die Feststellbremse 17, mittels welcher der Führungsschlitten 4 auf der Führungsschiene 2 arretiert wird, gelöst, so dass die Abstützplatte 5 aus der vertikalen in die horizontale Stellung abgeklappt und auf der Führungsschiene 2 in die gewünschte Position verschoben werden kann.

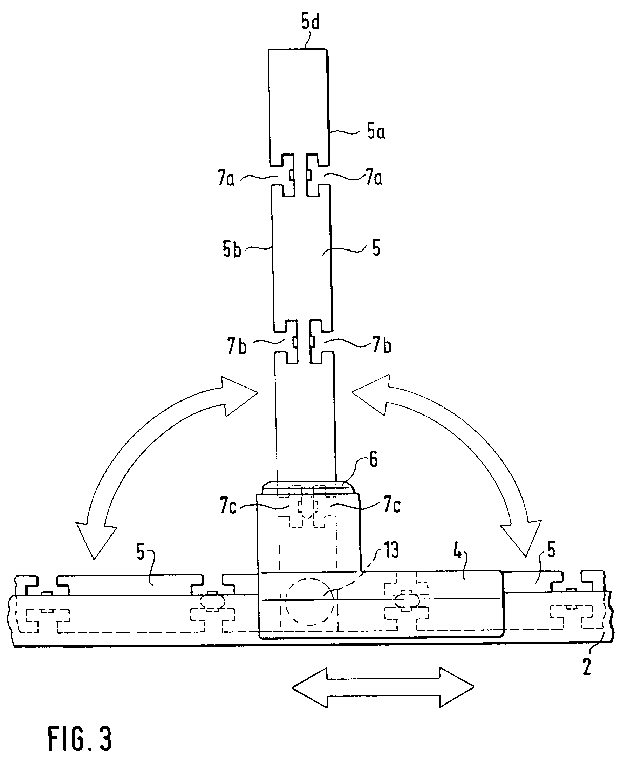

In Figur 3 sind die Abstützplatte 5 in ihren beiden horizontalen Stellungen parallel zum Kofferraumboden 1 und in ihrer aufgerichteten Stellung senkrecht zum Kofferraumboden 1 sowie die Verschiebrichtung des Führungsschlittens 4 auf der Führungsschiene 2 dargestellt.

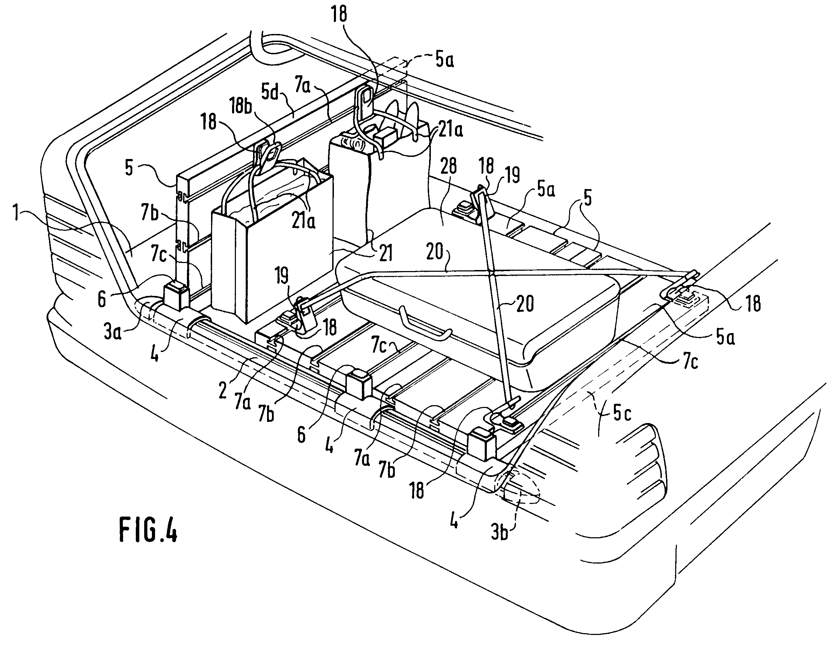

Figur 4 zeigt die Vorrichtung eingebaut im Kraftfahrzeug-Kofferaum mit zwei Abstützplatten 5 mit horizontaler sowie einer Abstützplatte 5 in vertikaler Stellung.

An den Verbindungselementen 7a, 7b, 7c der Abstützplatten 5 sind Befestigungsmodule 18 angebracht.

Die Aufklappteile 18b der Befestigungsmodule 18 sind mit Oesen 19 versehen, an denen Spannseile 20 zur Sicherung des Ladegutes 28 befestigt werden können.

Angeordnet an einer vertikal aufgerichteten Abstützplatte 5 können am Aufklappteil 18b auch die Traggriffe 21a einer Einkaufstasche 21 eingehängt und diese so gegen Umkippen gesichert werden.

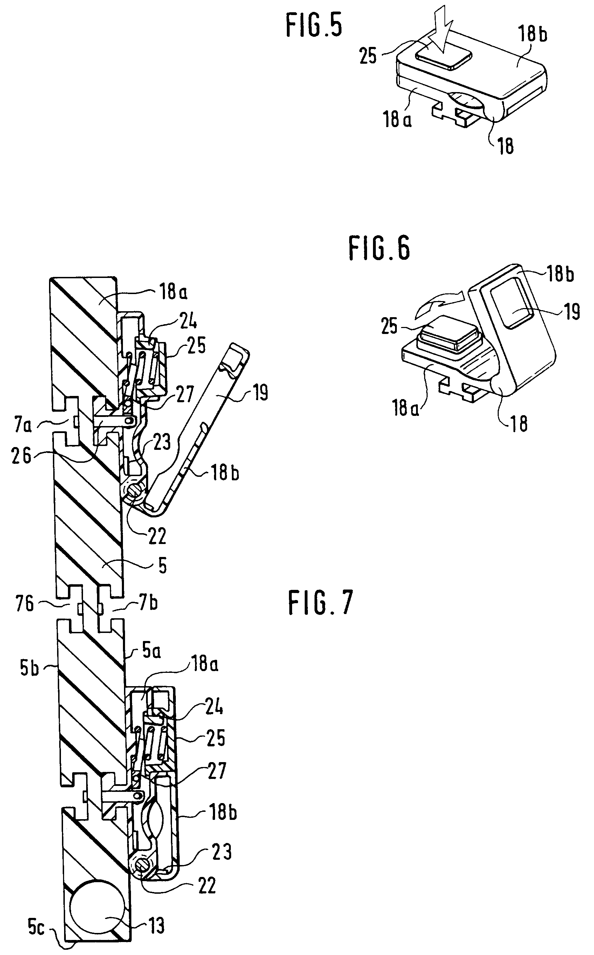

Wie in den Figuren 5 bis 7 dargestellt, ist das Aufklappteil 18b des Befestigungsmoduls 18 über die Achse 22 an der Befestigungsplatte 18a angelenkt.

An der Befestigungsplatte 18a ist der Verschlusshaken 24 angeordnet, welcher das Aufklappteil 18b in der eingeklappten Stellung gegen die Kraft der Schenkelfeder 23 festhält.

Durch Betätigen der Taste 25 wird der Verschlusshaken 24 soweit verschoben, dass das Aufklappteil 18b freigegeben wird und unter Krafteinwirkung der Schenkelfeder 23 aufklappt.

Gleichzeitig wird beim Drücken der Taste 25 über den Umlenkhebel 27 auch die Verriegelung 26 gelöst, welche den Befestigungsmodul 18 an den Verbindungselementen 7a, 7b, 7c in der gewünschten Position arretiert.

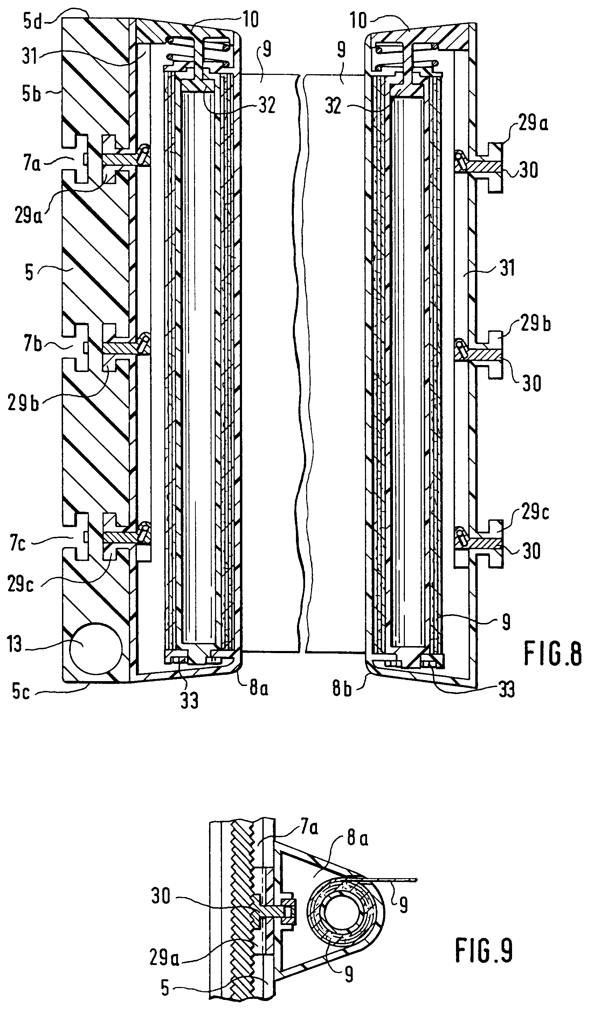

In Figuren 8 und 9 werden zwei Gurtmodule 8a, 8b dargestellt, welche über den Gurt 9 miteinander verbunden sind.

An den Gurtmodulen 8a, 8b sind die Befestigungsvorrichtungen 29a, 29b, 29c angeordnet, mittels denen die Gurtmodule 8a, 8b an den Verbindungselementen 7a, 7b, 7c befestigt werden können.

In den Befestigungsvorrichtungen 29a, 29b, 29c, sind Verriegelungen 30 untergebracht, welche beim Betätigen der Drucktaste 10 über die Leiste 31 inaktiviert werden, so dass die Gurtmodule 8a, 8b auf der Abstützplatte 5 in die gewünschte Position verschoben werden können.

Durch Betätigen der Drucktaste 10 wird auch die Bremse 32 gelöst, welche den Gurt 9 in den Auszugsstellungen gegen die Kraft der Aufrollmechanik 33, bzw. gegen Zug blockiert.

## Patentansprüche

1. Vorrichtung zum variablen Unterteilen eines Kraftfahrzeug-Kofferraums und Festhalten des Ladegutes, mit einer im Bereich des Kofferraumbodens (1) angeordneten Führungsschiene (2) sowie einer Abstützplatte (5), welche mittels eines Führungsschlittens (4) rechtwinklig zur Führungsschiene (2) und quer verschieblich in dieser geführt ist, wobei die Abstützplatte (5) drehbar im Führungsschlitten (4) gelagert ist und von einer horizontalen Lage, in welcher sie im wesentlichen parallel zum Kofferraumboden (1) liegt, in eine im wesentlichen senkrechte Lage zum Kofferraumboden (1) hochgeschwenkt werden kann, wobei der Führungsschlitten (4) auf der Führungsschiene (2) mittels einer Feststellbremse (17) arretierbar ist, die über eine Entriegelungsvorrichtung (6) manuell gelöst werden kann, **dadurch gekennzeichnet**, daß die Abstützplatte (5) in ihrer senkrechten Lage mittels einer Arretierung (16a, 16b) festgehalten wird, die mittels einer Entriegelungsvorrichtung (6) manuell gelöst werden kann, und daß die Arretierung (16a, 16b) und die Feststellbremse (17) über eine gemeinsame Entriegelungsvorrichtung (6) gelöst werden können.

2. Vorrichtung noch Anspruch 1, **dadurch gekennzeichnet**, daß die Abstützplatte (5) im Führungsschlitten (4) um 180 Grad schwenkbar ist.

3. Vorrichtung noch Anspruch 1, **dadurch gekennzeichnet**, daß mehrere Abstützplatten (5) nebeneinander in der Führungsschiene (2) angeordnet sind.

4. Vorrichtung noch Anspruch 1, **dadurch gekennzeichnet**, daß die Abstützplatten (5) auf ihren Breitseiten (5a, 5b) mit Verbindungselementen (7a, 7b, 7c) versehen sind.

5. Vorrichtung noch Anspruch 4, **dadurch gekennzeichnet**, daß die Verbindungselemente (7a, 7b, 7c) als Nut- und Federführungen ausgebildet sind, welche sich parallel zu den horizontalen Stirnseiten (5c, 5d) im wesentlichen über die Länge der Abstützplatten (5) erstrecken.

6. Vorrichtung noch Anspruch 4, **dadurch gekennzeichnet**, daß Module (8a, 8b, 18) vorgesehen sind, welche über die Verbindungselemente (7a, 7b,7c) kraftschlüssig mit der Abstützplatte (5) verbunden werden können.

7. Vorrichtung noch Anspruch 5 und 6, **dadurch gekennzeichnet**, daß die Module (8a, 8b, 18) in den Nut- und Federführungen (7a,7b, 7c) längsverschieblich geführt und mittels manuell lösbaren Verriegelungen (26,30) arretiertbar sind.

8. Vorrichtung noch Anspruch 6, **dadurch gekennzeichnet**, daß der Befestigungsmodul (18) mit einem Aufklappteil (18b) versehen ist, welcher eine Öse (19) enthält und in der aufgeklappten Stellung einen Befestigungshaken bildet.

9. Vorrichtung noch Anspruch 6, **dadurch gekennzeichnet**, daß die Module (8a, 8b, 18) einen Gurtmodul (8a, 8b) umfassen, in welchem ein ausziehbarer Gurt (9) untergebracht ist.

10. Vorrichtung noch Anspruch 9, **dadurch gekennzeichnet**, daß eine Aufrollmechanik (33) vorgesehen ist, welche den Gurt (9) in den Gurtmodul (8a, 8b) einzieht.

11. Vorrichtung noch Anspruch 10, **dadurch gekennzeichnet**, daß eine Bremse (32) vorgesehen ist, welche den Gurt (9) in den Auszugsstellungen blockiert.

12. Vorrichtung noch Anspruch 11, **dadurch gekennzeichnet**, daß Mittel (10) zum manuellen Lösen der Bremse (32) vorgesehen sind.

13. Vorrichtung nach Anspruch 9, **dadurch gekennzeichnet**, daß der Gurt (9) an seinem äußeren Ende mit einer Befestigungsvorrichtung (29a, 29b, 29c) versehen ist, die mit den Verbindungselementen (7a, 7b, 7c) kraftschlüssig verbunden werden kann.

14. Vorrichtung nach Anspruch 13, **dadurch gekennzeichent**, daß zwei Gurtmodule (8a, 8b) über einen gemeinsamen Gurt (9) miteinander verbunden sind.

15. Vorrichtung noch Anspruch 9, **dadurch gekennzeichnet**, daß die Breite des Gurtes (9) in etwa der Höhe der aufgeklappten Abstützplatte (5) entspricht.

16. Vorrichtung noch Anspruch 1, **dadurch gekennzeichnet**, daß zusätzliche Mittel (9) zur Unterteilung des Kofferraums quer zur Abstützplatte (5) vorgesehen sind.

17. Vorrichtung noch Anspruch 16, **dadurch gekennzeichnet**, daß die Mittel (9) an den Abstand zwischen zwei Abstützplatten (5) anpassbar sind.

18. Vorrichtung noch Anspruch 9 und 17, **dadurch gekennzeichnet**, daß die Mittel (9) Gurtmodule (8a, 8b) umfassen, welcher die Abstützplatten (5) verbinden.

## Claims

1. A device for the variable division of a motor vehicle luggage compartment and for securing the loaded goods, having a guide rail (2) arranged in the region of the luggage compartment floor (1), and also a support panel (5), which is guided by means of a sliding guide block (4) in this guide rail (2) at right angles to the guide rail and so as to be transversely displaceable therein, the support panel (5) being mounted so to rotate in the sliding guide block (4) and being arranged to be swivelled up out of a horizontal position, in which it lies substantially parallel to the luggage compartment floor (1) into a position substantially at right angles to the luggage compartment floor (1), the sliding guide block (4) being arranged to be locked on the guide rail (2) by means of a locking catch (17) that is manually releasable by way of an unlocking device (6), **characterised in that** the support panel (5) is secured in its vertical position by means of a locking member (16a, 16b), which is manually releasable by means of an unlocking device (6), and the locking member (16a, 16b) and the locking catch (17) can be released by way of a common unlocking device (6).

2. A device according to claim 1, **characterised in that** the support panel (5) is pivotable in the sliding guide block (4) through 180 degrees.

3. A device according to claim 1, **characterised in that** several support panels (5) are arranged side by side in the guide rail (2).

4. A device according to claim 1, **characterised in that** the support panels (5) are provided on their wide sides (5a, 5b) with connecting elements (7a, 7b, 7c).

5. A device according to claim 4, **characterised in that** the connecting elements (7a, 7b, 7c) are in the form of tongue and groove guides which extend parallel to the horizontal ends (5c, 5d) substantially for the length of the support panels (5).

6. A device according to claim 4, **characterised in that** modules (8a, 8b, 18) are provided, which can be connected non-positively to the support panel (5) by way of the connecting elements (7a, 7b, 7c).

7. A device according to claim 5 and 6, **characterised in that** the modules (8a, 8b, 18) are guided in the tongue and groove guides (7a, 7b, 7c) so as to be longitudinally displaceable and are arranged to be locked by means of manually releasable locking mechanisms (26, 30).

8. A device according to claim 6, **characterised in that** the fixing module (18) is provided with a fold-out part (18b), which contains an eye (19) and in the folded-out position forms a fastening hook.

9. A device according to claim 6, **characterised in that** the modules (8a, 8b, 18) comprise a belt module (8a, 8b), in which a pull-out belt (9) is housed.

10. A device according to claim 9, **characterised in that** a roll-up mechanism (33), which draws the belt (9) into the belt module (8a, 8b), is provided.

11. A device according to claim 10, **characterised in that** a catch (32), which locks the belt (9) in the pulled-out positions, is provided.

12. A device according to claim 11, **characterised in that** means (10) are provided for manual release of the catch (32).

13. A device according to claim 9, **characterised in that** the belt (9) is provided at its outer end with a fastening device (29a, 29b, 29c), which can be joined non-positively with the connecting elements (7a, 7b, 7c).

14. A device according to claim 13, **characterised in that** two belt modules (8a, 8b) are joined together by way of a common belt (9).

15. A device according to claim 9, **characterised in that** the width of the belt (9) corresponds approximately to the height of the opened-out support panel (5).

16. A device according to claim 1, **characterised in that** additional means (9) are provided for dividing the luggage compartment transversely to the support panel (5).

17. A device according to claim 16, **characterised in that** the means (9) are arranged to be matched to the distance between two support panels (5).

18. A device according to claim 9 and 17, **characterised in that** the means (9) comprise belt modules (8a, 8b), which connect the support panels (5).

## Revendications

1. Dispositif de compartimentage variable d'un coffre de véhicule à moteur et de fixation de la charge, comportant un rail de guidage (2) disposé dans la zone du plancher(1) du coffre, ainsi qu'un panneau d'appui (5) qui, au moyen d'un chariot de guidage (4), est guidé dans ce rail avec liberté de coulisser perpendiculairement au rail de guidage (2) et transversalement, dans lequel le panneau d'appui (5) est porté sur le chariot de guidage (4) avec liberté de rotation et peut pivoter vers le haut pour passer, d'une position horizontale dans laquelle il est placé sensiblement parallèlement au plancher (1) du coffre, dans une position sensiblement verticale par rapport au plancher (1) du coffre, dans laquelle le chariot de guidage (4) peut se bloquer sur le rail de guidage (2) au moyen d'un frein d'immobilisation (17) qui peut être déverrouillé manuellement par l'intermédiaire d'un dispositif de déverrouillage (6), caractérisé par le fait que le panneau d'appui (5) est maintenu dans sa position verticale au moyen d'un dispositif de blocage (16a, 16b) qui peut être déverrouillé manuellement au moyen d'un dispositif de déverrouillage (6) et que le dispositif de blocage (16a, 16b) et le frein d'immobilisation (17) peuvent être déverrouillés au moyen d'un dispositif de déverrouillage commun (6).

2. Dispositif selon la revendication 1, caractérisé par le fait que le panneau d'appui (5) peut pivoter de 180 degrés dans le chariot de guidage (4).

3. Dispositif selon la revendication 1, caractérisé par le fait que plusieurs panneaux d'appui (5) sont disposés l'un à côté de l'autre dans le rail de guidage (2).

4. Dispositif selon la revendication 1, caractérisé par le fait que les panneaux d'appui (5) sont munis d'éléments de liaison (7a, 7b, 7c) sur leur grande face (5a, 5b).

5. Dispositif selon la revendication 4, caractérisé par le fait que les éléments de liaison (7a, 7b, 7c) sont conçus sous forme de guidages à rainure et languette qui s'étendent parallèlement aux faces frontales horizontales (5c, 5d) sensiblement sur la longueur des panneaux d'appui (5).

6. Dispositif selon ai revendication 4, caractérisé par le fait que sont prévus des modules (8a, 8b, 18) qui peuvent être reliés par serrage au panneau d'appui (5) au moyen des éléments de liaison (7a, 7b, 7c).

7. Dispositif selon la revendication 5 ou 6, caractérise par le fait que les modules (8a, 8b, 18) sont guidés avec liberté de coulissement longitudinal dans les guidages à rainure et languette (7a, 7b, 7e) et peuvent être bloqués au moyen de verrouillages (26, 30) déverrouillables manuellement.

8. Dispositif selon la revendication 6, caractérisé par le fait que le module de fixation (18) est muni d'une partie ouvrante (18b) qui contient un oeillet (19) et, eu position ouverte, forme un crochet de fixation.

9. Dispositif selon la revendication 6, caractérisé par le fait que les modules (8a, 8b, 18) comportent un module à ceinture (8a, 8b) dans lequel est logée une ceinture extractible (9).

10. Dispositif selon la revendication 9, caractérisé par le fait qu'est prévue une mécanique d'enrouleur (33) qui rétracte la ceinture (9) dans le module à ceinture (8a, 8b).

11. Dispositif selon la revendication 10, caractérisé par le fait qu'est prévu un frein (32) qui bloque la ceinture (9) dans les positions d'extraction.

12. Dispositif selon la revendication 11, caractérisé par le fait que sont prévus des moyens (10) pour déverrouiller manuellement le frein (32).

13. Dispositif selon la revendication 9, caractérisé par le fait qu'à son extrémité extérieure la ceinture (9) est munie d'un dispositif de fixation (29a, 29b, 29c) que l'on petit relier par serrage aux éléments de liaison (7a, 7b, 7c).

14. Dispositif selon la revendication 13, caractérisé par le fait que deux modules a ceinture (8a, 8b) sont reliés l'un à l'autre par une ceinture commune (9).

15. Dispositif selon la revendication 9, caractérisé par le fait que la largeur de la ceinture (9) correspond à peu près à la hauteur du panneau d'appui (5) dressé.

16. Dispositif selon la revendication 1, caractérisé par le fait que sont prévus des moyens supplémentaires (9) pour le compartimentage du coffre transversalement par rapport au panneau d'appui (5).

17. Dispositif selon la revendication 16, caractérisé par le fait que les moyens (9) peuvent s'adapter à la distance entre deux panneaux d'appui (5).

18. Dispositif selon la revendication 9 et 17, caractérisé par le fait que les moyens (9) comportent des modules à ceinture (8a, 8b) qui relient les panneaux d'appui (5).
